# EUROPEAN PATENT APPLICATION

(11) **EP 2 290 359 A1**
(43) Date of publication of application: **02.03.2011**
(21) Application number: 09010625.3
(22) Date of filing: 18.08.2009
(51) Int. Cl.: G01N 27/414

(54) **Semiconductor device and method for manufacturing a semiconductor device**

(71) Applicant: Universität Ulm, 89081 Ulm (DE)
(72) Inventor: Dipalo, Michele, 89231 Neu-Ulm (DE); Kohn, Erhard, 89081 Ulm (DE)
(74) Representative: Reitzle, Helmut

(57) **Abstract**

The invention concerns a semiconductor device (1) comprising a structure, wherein the structure comprising a substrate (8), a first layer (2) onto the substrate comprising GaN and a second layer (3) comprising AlGaN. The second layer is deposited onto the first layer and the first and the second layer cover at least partially the substrate, and wherein the structure comprises a third layer (4) comprising diamond.

## Description

The invention relates to a semiconductor device as well as a method for manufacturing such a semiconductor device.

Chemical sensors based on semiconductor technology, such as ChemFETs, have shown very promising results in terms of performance and costs. All these ChemFETs have been however produced up to now without any integrated doped diamond electrode element, which is the only inert and corrosion resistant electrode except noble metals. This lack of the presently available ChemFET technology results in devices with poor corrosion robustness, a short life-time in many environments and a limited range of applications, which cannot include harsh environment, oxidizing and corrosive media or anodic over-potential conditions. These limitations have strongly restricted the use of ChemFETs in favour of more traditional electrochemical electrodes and sensors based on inert metals, glass or membranes.

The integration of a diamond active element on previous and well-established semiconductor technologies, like Si-MOSFETs or GaN HEMTs, is therefore an advantageous and cost-effective solution to produce new chemical sensors with unique and attractive properties, such as high stability and long life-time in harsh environment. However such integration has been so far not successful due to incompatibility of electrochemical grade diamond growth conditions with silicon or GaN based devices; most critically the substrate temperature for electrochemical grade diamond growth has been typically between 650 and 800 °C in a hydrogen radical rich atmosphere, which is above the thermal stability limit of silicon, GaN or other semiconductor based devices.

Examples for ChemFETs of prior art are Si-ChemFETs or AlGaN/GaN-ChemFETs and are described in the following in more detail.

Si-ISFETs are conventionally fabricated on the basis of Si-MOSFETs. The gate electrode in contact with the liquid is however in most cases a metal oxide or metal nitride electrode, because of the limited electrochemical stability and corrosion resistance of the SiO₂ surface. Therefore, in this case the chemical properties of the ChemFET, such as sensitivity and stability, are determined by the metal oxide or metal nitride electrode. Because of the limited stability of these various electrode surfaces, such devices are difficult to use in harsh conditions.

AlGaN/GaN heterostructures have been used as ChemFETs in bio-chemical applications in the past. In this case the AlGaN surface has been used as electrode surface. Here the electrochemical activity is caused by surface hydroxyl bonds stemming from the oxygen termination of the surface in atmosphere. Although the heterostructure is grown under hydrogen rich conditions and therefore hydrogen terminated, the surface converts in atmosphere quickly to oxygen termination. Under anodic polarization the oxidation of the AlGaN barrier material continues and the barrier layer degrades slowly. Thus the AlGaN/GaN HEMT is only conditional stable in an electrolyte. Its use is therefore confined to the rather mild biochemistry.

Nevertheless AlGaN/GaN FETs are today among the ref-' erence devices for electronic performance and are cost-effective devices due to their mature material development for optoelectronic applications. Moreover AlGaN/GaN is an optically transparent material for wavelengths down to the UV. Their exploitation in bio and electro-chemistry would be thus a major achievement.

It is therefore the object of the present invention to find a semiconductor device and a method to produce such a semiconductor device, which can combine the performance and the economical advantages of AlGaN/GaN FETs with the unique electrochemical properties of diamond.

This object is solved by the semiconductor device according to claim 1 and the method for manufacturing a semiconductor device according to claim 20. Advantageous developments of the semiconductor device and the method for manufacturing are given by the respective dependent claims.

The semiconductor device according to the present invention comprises a structure comprising a substrate, a first layer onto the substrate comprising GaN and a second layer comprising AlGaN, wherein the second layer is deposited onto the first layer and the first and the second layer cover at least partially the substrate, and wherein the structure comprises a third layer comprising diamond.

This invention relates to a new semiconductor device and a method to produce it. The new device comprises an AlGaN/GaN FET and an active doped diamond electrochemical electrode grown on the same substrate of the AlGaN/GaN FET by means of a new diamond growth technique. AlGaN/GaN is a heterostructure commonly used in high power electronic FET-devices, but has not been combined with a diamond overgrowth successfully in the past, because of the above mentioned chemical/thermal stability problems.

The new diamond growth technique described in this invention relates to a low temperature CVD process which allows obtaining quasi-metallic conductive diamond with sufficient quality for bio and electrochemical applications, while preserving the AlGaN/GaN heterostructure and its properties.

The new sensor concept (Diamond - AlGaN/GaN Chemical Sensor) comprises an active diamond electrochemical electrode grown beside and on the same substrate with an AlGaN/GaN FET. The diamond electrochemical electrode is electrically connected to the gate pad of the AlGaN/GaN FET and in direct contact with the medium to be analyzed.

The AlGaN/GaN heterostructure used for this chemical sensor can essentially possess the standard characteristics of that used for other electronic devices. The main requirements of the heterostructure used for the chemical sensor are a low pinch-off voltage and a relatively high thermal stability.

The AlGaN/GaN FET should possess a pinch-off voltage of approximately -2V and should be usable in enhancement mode with a gate bias up to +1 or to +1.5V. In this way the whole diamond electrochemical potential window, which is approximately 3V in the µA/cm² range, can be exploited in the high transconductance range of the AlGaN/GaN FET. The AlGaN/GaN heterostructure should be thermally stable up to approximately 400 to 450 °C in order to survive the diamond growth process. In 2005 P. May et al. ("Deposition of CVD onto GaN", Diamond and Related Materials, Vol. 15, Issues 4-8, Apr.-Aug. 2006, p. 526-530) have shown in a scientific paper that GaN layers are only stable at temperatures up to 500 °C during CVD diamond growth. The required thermal stability is therefore currently available with the standard AlGaN/GaN growth and fabrication process. The substrate of the semiconductor AlGaN/GaN device may be sapphire, Si, SiC or diamond.

The transconductance and sensitivity of the chemical sensor are related to the characteristics of the AlGaN/GaN FET. An aluminium content of approximately 30% and a barrier thickness of about 10 to 20 nm are suitable for the ChemFET structure.

Preferably, the semiconductor device comprises the first layer deposited onto the substrate and the second layer deposited onto the first layer covering the first layer at least partially and besides the second layer the third layer deposited onto the first layer.

A low vertical thermal conductivity layer can be deposited onto the first layer and the second layer and a high horizontal thermal conductivity layer can be deposited onto the low thermal conductivity layer and besides the third layer can be deposited.

Preferably, the low vertical thermal conductivity layer and the high horizontal thermal conductivity layer can form the barrier layer.

Advantageously, the first layer is deposited on the substrate covering the substrate completely or partially and the second layer is deposited onto the first layer and besides the first and second layer the third layer is deposited onto the substrate or onto the first layer.

The substrate of the inventive semiconductor device can comprise or consist of sapphire, Si, SiC or diamond.

The semiconductor device can comprise a gate deposited on the first layer and/or the second layer and/or the third layer.

The third layer can be nano-crystalline or single-crystalline or poly-crystalline. Additionally, the third layer can have a grain size of 10 nm to 5 µm. By using a grain size in the mentioned range at the surface a high electrochemical activity is obtainable.

It is preferred that the third layer of a semiconductor device comprises diamond which is in part not doped and/or in part quasi-metallically doped, n-type doped, for example with nitrogen, or p-type doped, for example with boron.

The third layer can be doped with boron, preferably with a doping concentration p > 10¹⁸ cm⁻³, preferably p > 10¹⁹ cm⁻³ and/or preferably p < 10²¹ cm⁻³, preferably p < 10²⁰ cm⁻³.

The diamond electrochemical electrode must satisfy certain requirements in order to be used in bio and electro-chemistry, especially in harsh environment applications. First of all the diamond electrode must show quasi-metallic electrical conductivity, which can be achieved by boron doping with boron concentration higher than 10²⁰ cm⁻³. Secondly the diamond electrode should contain a low amount of non-diamond carbon phases, like graphite, amorphous carbon or boron and boron-carbon clusters, which do not possess the chemical stability and the chemical sensitivity of diamond. As result a highly doped diamond layer has a high chemical inertness and a high chemical robustness.

The satisfaction of the two above mentioned requirements needs normally a diamond growth temperature between 650 °C and 800 °C, which is not compatible with the thermal stability of AlGaN/GaN. Therefore a new method to grow quasi-metallic conductive diamond with low amount of graphitic phase on AlGaN/GaN at low temperature is introduced with this invention. This method is therefore described separately in details in the next section of this invention.

Growth of high quality and highly conductive diamond at low temperatures, which is required for the new structure of this invention, has been and is still an unsolved problem. In scientific literature no papers or books have reported on the growth of high quality and highly conductive diamond on AlGaN/GaN or other semiconductors based FET transistors. In 2001 M. Seelmann-Eggebert et al. ("Heat-spreading diamond film for GaN-based high-power transistor devices", Diamond and Related Materials, Vol. 10, Issues 3-7, Mar.-Jul. 2001, p. 744-749) reported on the growth at low temperature of diamond films on GaN based devices for heat sink applications. Nevertheless their work does not contain information on the quality of the grown diamond film and most important the grown diamond film has been undoped, being therefore completely incompatible with the ChemFET structure described in this invention or any other chemical sensor structure.

The particular configuration of the new AlGaN/GaN ChemFET, which comprises an integrated diamond electrode grown beside the AlGaN/GaN FET, allows however to use new strategies in order to grow high quality and quasi-metallic conductive diamond at low temperature.

The lateral position of the diamond electrode in respect of the AlGaN/GaN FET allows in fact the use of barriers, or protection interlayers, on top of the AlGaN/GaN heterostructure during the diamond growth process. Such a barrier layer has to protect the AlGaN/GaN from the hydrogen radicals, the heat and the radiation produced by microwave plasma or hot filaments on the surface. However this barrier layer does not need to be suitable for diamond growth since the diamond electrochemical electrode is grown beside the AlGaN/GaN FET, where other interlayers can be used. According to the chosen ChemFET configuration, the barrier layer may be also removed from the AlGaN/GaN FET after the diamond growth process. In this case the barrier layer may be even superficially damaged by the diamond growth process without affecting the integrity of the AlGaN/GaN beneath. This fact enlarges considerably the number of possible configurations for the barrier layer, which can be therefore optimized to maximize the protection from heat and radiation.

The surface of the third layer can be modified by specific nanoparticles, carbide and/or metal compounds, preferably Pt or Au. If the surface of the diamond film is modified by special nanoparticles like carbide forming metals, carbide/metal compounds, Pt or Au enhancement of specific electrochemical reactions and/or effects, including specific doping profiles, could be reached.

Preferably, the third layer comprising diamond which is in part in contact with liquids.

In a preferred embodiment of the invention, the semiconductor device has an interlayer deposited in-between the third layer and the substrate or in-between the third layer and the first layer.

The interlayer can comprise a metal, preferably a carbide forming metal, for example Ir, metal alloys, metal oxides, for example Al₂O₃, amorphous silicon, Si₃N₄, SiO₂ or other silicon compounds, or a combination of other materials with low thermal conductivity.

The interlayer can be adapted to act as nucleation layer when diamond is disposed on this interlayer and/or being adapted to act as an insulating layer.

The second layer of the inventive semiconductor device has preferably a thickness between 5 nm and 25 nm, preferably 10 nm. It can have aluminium content between 0 % and 40 %, preferably 30 %.

The first layer of the inventive semiconductor device can have a thickness between 500 nm and 2 µm, preferably 1 µm.

Between the first layer and the second layer of the semiconductor device, a spacer layer containing AlN can be located. This spacer layer can be adapted to act as layer for obtaining a high mobility.

The semiconductor device according to the invention can comprise at least one passivation area. This can be grown selectively and is needed for protection for example from a solution.

The passivation area preferably comprises or consists of poly-crystalline diamond, nano-crystalline diamond, epoxy films, polyimide films, polytetrafluorethylen (PTFE).

The thickness of the barrier layer of the inventive semiconductor device can be between 10 nm and 20 µm, preferably between 1 µm and 10 µm.

The semiconductor device can be a field effect transistor or a high-electron mobility transistor or an ion-sensitive field effect transistor.

According to the invention, a method for manufacturing a semiconductor device is described, wherein a structure is produced by disposing a first layer comprising GaN, a second layer comprising AlGaN and a third layer comprising diamond, the layers being deposited on each other and/or on a substrate.

The new technique allows growing diamond at reasonable growth rate and doping incorporation with standard CVD methods, like Hot Filament or Microwave Plasma, using a substrate set temperature of 400 °C or lower. In this case in fact the substrate surface, where diamond has to be grown, is at a higher temperature due to the heating of the plasma or of the hot filaments. The higher temperature at the surface permits thus the growth of high quality and quasi-metallic conductive diamond. During this process the AlGaN/GaN heterostructure is however isolated from the plasma (or hot filaments) by means of the barrier layer described in the previous paragraph and is therefore not degraded.

The new diamond growth method requires:
- Deposition of the barrier layer on the AlGaN/GaN FET area. The barrier layer protects the AlGaN/GaN heterostructure from the chemical activity of the gas radicals and from the heat produced by the CVD energy source (for example microwave plasma or hot filaments). The thickness of the barrier layer may vary from tens of nanometers to several microns according to the barrier layer composition, to the substrate temperature and to the power density of the gas radicals. The barrier layer may contain SiO₂ or other elements/compounds with low thermal conductivity.
- Deposition of an interlayer on the area where the diamond electrode has to be grown. The interlayer acts as diamond nucleation sacrificial layer. This interlayer may comprise only one layer or may be a multi-layer stack. The interlayer materials may include silicon, silicon based compounds (SiO₂, Si₃N₄, ...) , metals, metal alloys and oxides, like Al₂O₃.
- Diamond nucleation step. Diamond nucleation may be obtained by BEN (Bias Enhanced Nucleation), nanoparticles seeding or scratching. The BEN process may be performed with the same CVD systems used for diamond growth by applying a negative potential to the substrate, achieving thus ion bombardment of the substrate surface.
- Diamond growth step. The diamond growth step may consist of only the growth of boron doped diamond or of the growth of a stack including an electrically insulating diamond layer and a conductive boron doped diamond layer. The top boron doped diamond layer should contain a low amount of non-diamond carbon phases and should be highly conductive (quasi-metallic). Furthermore the top diamond layer may be functionalized.

Preferably the diamond film is grown on top of the entire surface and etched back to the electrode areas (for example by oxygen plasma), which are located outside the active FET structure.

As interface to a surrounding electrolyte solution, a highly doped poly-, nano-crystalline diamond can be used.

In an embodiment, the third layer can be deposited before ohmic and/or Schottky contacts are built. The passivation area can be deposited after the ohmic and/or Schottky contacts deposition.

Preferably, a semiconductor device as described above can be manufactured.

In the following, the invention shall be explained with reference to figures 1 to 6 and example 1.
Figure 1A shows a diamond electrochemical electrode besides an AlGaN/GaN device without passivation layer.
Figure 1B shows the diamond electrochemical electrode of figure 1A with passivation area.
Figure 2A shows a semiconductor device where AlGaN is deposited onto GaN and the diamond layer is deposited on an interlayer deposited on GaN.
Figure 2B shows GaN deposited onto a substrate and AlGaN deposited on GaN besides the diamond electrode deposited on an interlayer onto the substrate.
Figure 3 shows a barrier layer deposited onto AlGaN deposited on GaN deposited onto a substrate and besides the diamond electrode deposited on GaN and therebetween an interlayer.
Figure 4 shows a sample surface after the diamond nucleation step.
Figure 5 depicts a boron-doped diamond layer grown at the nucleated sample shown in figure 4.
Figure 6 shows the cyclic voltammograms of boron-doped diamond layers grown at 400 °C and at 700 °C.

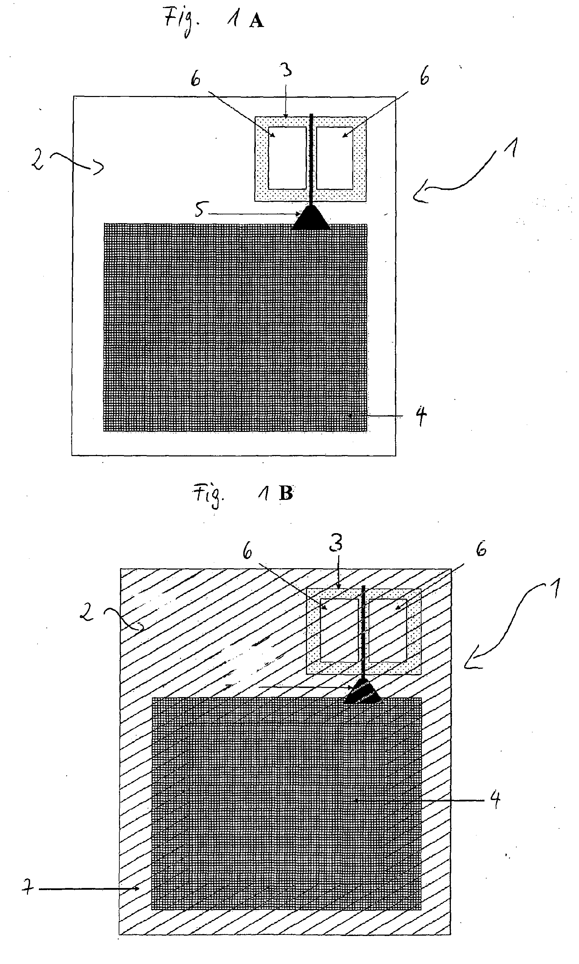

Figure 1A shows an inventive semiconductor device 1. The diamond electrochemical electrode 4 may be grown beside the AlGaN 3/GaN 2 as shown in figure 1A. The gate 5 of the AlGaN 3/GaN 2 FET has to be electrically connected to the diamond electrochemical electrode 4 by the gate pad or by a metal line. The relative position of the diamond electrode and of the AlGaN 3/GaN 2 FET is not critical and can be adjusted according to the application. For example a multi-sensor chip may be fabricated with an array of AlGaN 3/GaN 2 FETs each connected to a diamond electrochemical electrode. Ohmic contacts are deposited onto the AlGaN 3 layer at least partially.

Figure 1B shows the same structure as figure 1A after the deposition of a passivation layer 7 on the complete device 1. The passivation layer 7 has an opening on the diamond electrode 4, which can then be in direct contact with the electrolyte solution or functionalized with further treatments.

A typical fabrication flow for the AlGaN 3/GaN 2 Chemical Sensor with Integrated Diamond Electrochemical Electrode 4 is listed here:
- AlGaN 3/GaN 2 heterostructure deposited on Si, SiC, Al₂O₃, diamond or other substrates 8.
- Etching of the mesa structure of AlGaN 3/GaN 2 heterostructure.
- Deposition and structuring of the interlayers 9 and/or barrier layers 12.
- Growth of the diamond electrode layers 4.
- Patterning of the diamond electrode 4 by etching of the diamond and of the interlayer 9 stack.
- Deposition of the ohmic contacts 6 of the AlGaN 3/GaN 2 FET.
- Deposition of the gate contact 5 electrically connected to the diamond electrode 4.
- Deposition of a passivation layer 7 over the complete structure.
- Patterning of the passivation layer 7 with the aperture for the diamond electrode 4.

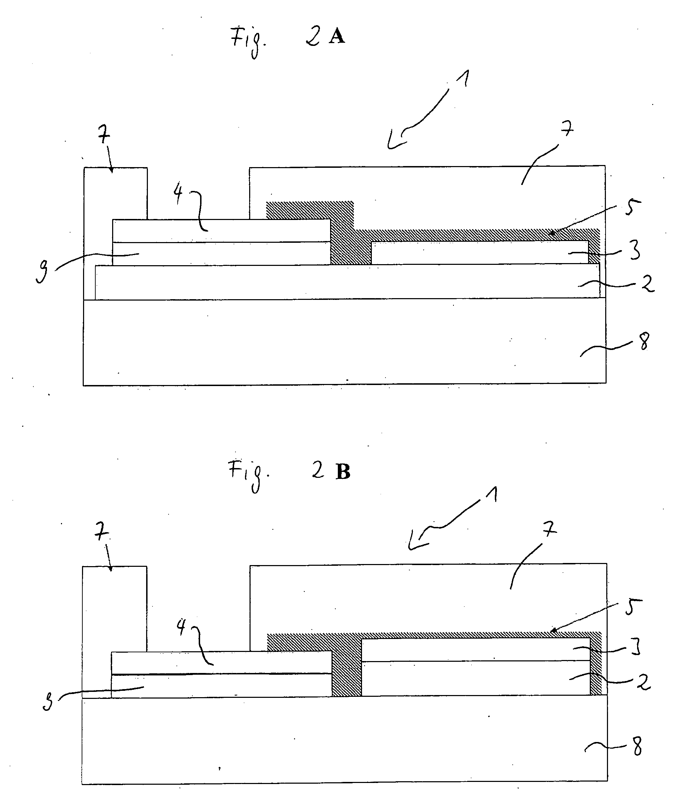

The above listed fabrication steps may be exchanged in order or slightly modified according to the specific structure which has to be produced. The mesa etching of the AlGaN 3/GaN 2 can for example be performed down to the GaN buffer 2 or to the substrate 8. The diamond electrochemical electrode 4 will be then grown on the GaN buffer 2 or on the substrate 8. These two possible configurations are shown in figures 2A and 2B.

Furthermore the diamond growth process may be performed after only mesa etching, after mesa etching and ohmic contact deposition or after the complete FET fabrication including mesa etching, ohmic contact and gate deposition. The diamond deposition may be also performed selectively only on the electrode area, so that no diamond growth occurs on the AlGaN/GaN FET area.

The passivation of the device should be obtained with a chemically stable and inert material such as diamond, epoxy or polyimide films. For applications in mild chemical media or in soft pH electrolytes other types of passivation may be used.

Figure 2A shows a semiconductor device 1, where the GaN-layer 2 covers most of the surface of the substrate 8. Onto the GaN-layer 2, a AlGaN-layer 3 is deposited and above the gate 5 and the passivation area 7 is situated. Besides the AlGaN-layer 3 an interlayer 9 is deposited onto the GaN-Layer 2. The diamond layer 4 is on top of the interlayer 9. The passivation area 7 is one continuous layer with an opening on the diamond layer 4.

Figure 2B shows a semiconductor device 1, where the GaN-layer 2 and the AlGaN-layer 3 are deposited onto the substrate 8 and besides the interlayer 9 and the diamond layer 4 are deposited. This semiconductor device 1 contains a gate 5 and a passivation area 7, which is one continuous layer with an opening on the diamond layer 4.

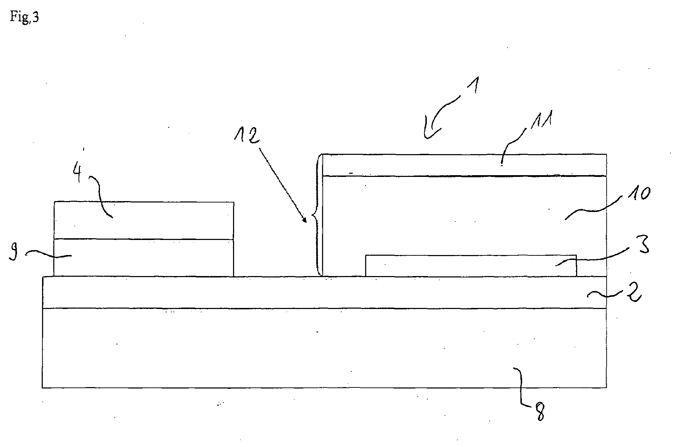

The configuration of the barrier layer 12 should satisfy mainly three requirements, which are shown graphically in figure 3. The barrier layer 12 on top of the AlGaN 3/GaN 2 heterostructure may consist of one or more layers. The bottom layer of the barrier, which is in contact with the AlGaN 3 layer, should not react with AlGaN at temperatures up to 400 to 500 °C in order to preserve the AlGaN 3/GaN 2 structure. The middle part 10 of the barrier should possess an extremely low thermal conductivity in the vertical direction, so that the thermal flux heat coming from the diamond growth environment does not reach the AlGaN 3 layer. Finally the top layer 11 of the barrier should present a high lateral thermal conductivity in order to transfer the heat away from the AlGaN 3/GaN 2 area of the device. An interlayer 9 is deposited onto the GaN-layer 2 and on top of the interlayer 9 a diamond layer 4 is situated.

### Example 1

A GaN layer has been coated with highly doped diamond at a substrate temperature of 400 °C with Microwave Plasma CVD in hydrogen rich atmosphere with methane. Before diamond growth the GaN-layer has been protected with a 250 nm SiO₂ barrier layer, which possesses very low thermal conductivity. On top of the SiO₂ barrier layer amorphous silicon has been deposited in order to perform Bias Enhanced Nucleation with Microwave Plasma CVD.

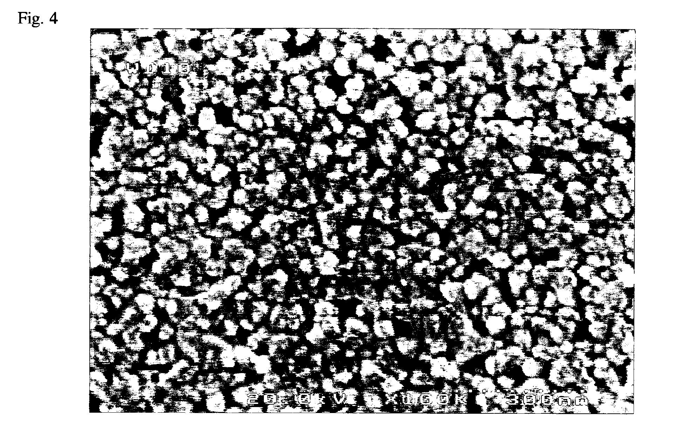

Figure 4 shows the surface of the above described sample after the diamond nucleation step performed at substrate temperature of 400 °C. The picture shows that a nucleation density higher than 10¹⁰ cm⁻² is reached even at this low substrate temperature. This high nucleation density at low substrate temperature has been achieved thanks to the high radical concentration and to the high power density of the microwave plasma.

This nucleation density allows to obtain closed and pin-hole free diamond layers with thicknesses as low as 200 to 400 nm. Figure 4 shows also that the interlayer surface beneath the diamond nuclei does not present pitches, cracks or bubbles after the nucleation process at 400 °C, suggesting that the GaN layer has been stable during the process.

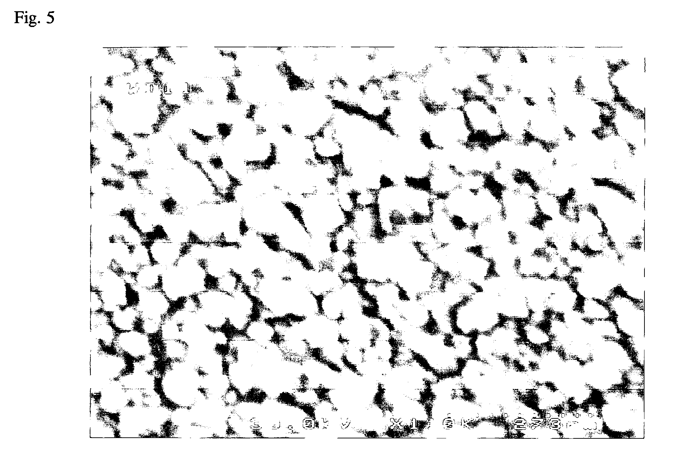

Figure 5 depicts a boron doped diamond layer grown at 400 °C in Microwave Plasma CVD on the nucleated sample shown in figure 4. The diamond thickness is approximately 400 nm. The diamond layer shown in this SEM picture reveals a closed layer with typical diamond crystallinity. The grain size is approximately 50 nm. The crystalline surface morphology of the boron doped diamond layer grown at 400 °C suggests a predominant diamond phase carbon in the material. The boron doping source has been in this case a boron coated metal rod inserted in the plasma during the growth. The high power density of the microwave plasma allowed to obtain high boron concentration in the growth atmosphere and thus also in the grown diamond layer.

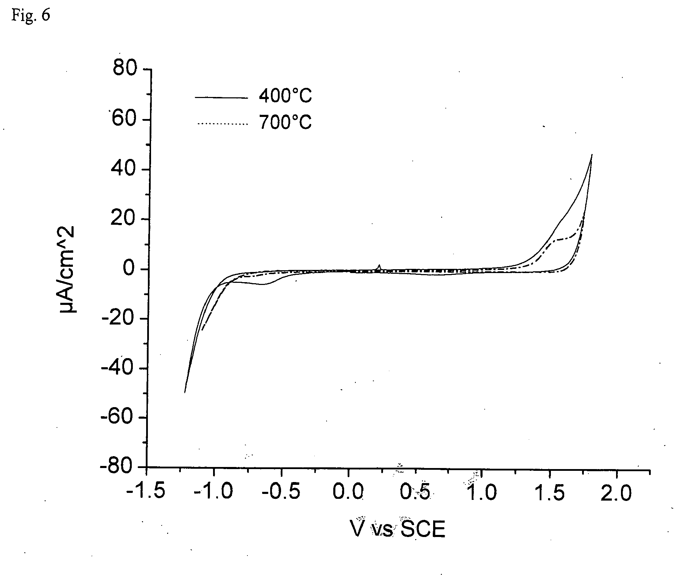

Figure 6 shows the cyclic voltammogram of the boron doped diamond layer grown at 400 °C on GaN in pH 1 electrolyte (0.1 M H₂SO₄ in water) compared to a boron doped diamond layer grown at 700 °C; the measurement has been taken with a standard 3 electrodes electrochemical cell. The graph shows that the two electrochemical potential windows have a comparable width of almost 3V in the µA/cm² range, which is still reflecting the diamond surface properties; for comparison, platinum or graphite electrodes have in fact a potential window width of 1.5V and 2V respectively. The growth at 400 °C does not affect therefore the electrochemical potential window of the boron doped diamond layer.

Moreover the background current within the potential window of the boron doped diamond grown at low temperature is only slightly higher than that of the sample grown at high temperature. The background current density of the boron doped diamond grown at low temperature is however still much lower than the typical gate diode leakage current of AlGaN/GaN FETs. Therefore such a boron doped diamond layer grown at 400 °C can be used as electrochemical electrode connected to the gate of an AlGaN/GaN FET to modulate the FET channel. This feature allows using the boron doped diamond - AlGaN/GaN combination as a dual mode ChemFET/electrode chemical sensor.

## Claims

1. Semiconductor device comprising a structure, the structure comprising a substrate, a first layer onto the substrate comprising GaN and a second layer comprising AlGaN, wherein the second layer is deposited onto the first layer and the first and the second layer cover at least partially the substrate, and wherein the structure comprises a third layer comprising diamond.

2. Semiconductor device according to the preceding claim,
**characterized in that** it comprises the first layer deposited onto the substrate and the second layer deposited onto the first layer covering the first layer at least partially and besides the second layer the third layer deposited onto the first layer.

3. Semiconductor device according to claim 2, **characterized in that** a low vertical thermal conductivity layer is deposited onto the first layer and the second layer and a high horizontal thermal conductivity layer is deposited onto the low thermal conductivity layer and besides the third layer is deposited.

4. Semiconductor device according to the previous claim,
**characterized in that** the low vertical thermal conductivity layer and the high horizontal thermal conductivity layer form the barrier layer.

5. Semiconductor device according to one of the preceding claims,
**characterized in that** the first layer is deposited on the substrate covering the substrate partially and the second layer is deposited onto the first layer and besides the first and second layer the third layer is deposited onto the substrate.

6. Semiconductor device according to one of the preceding claims,
**characterized in that** the substrate comprises or consists of sapphire, Si, SiC or diamond.

7. Semiconductor device according to one of the preceding claims,
**characterized in that** it comprises a gate deposited on the first layer and/or the second layer and/or the third layer.

8. Semiconductor device according to one of the preceding claims,
**characterized in that** the third layer is nano-crystalline or single-crystalline or poly-crystalline, and the third layer has preferably a grain size of 10 nm to 5 µm.

9. Semiconductor device according to one of the preceding claims,
**characterized in that** the third layer comprising diamond which is in part not doped and/or in part quasi-metallically doped, n-type doped, for example with nitrogen, or p-type doped, for example with boron.

10. Semiconductor device according to one of the preceding claims,
**characterized in that** the third layer comprising diamond which is in part modified by specific nanoparticles like carbide forming metals, carbide/metal compounds, Pt or Au, specific doping profiles for enhancement of specific electrochemical reactions/effects.

11. Semiconductor device according to one of the preceding claims,
**characterized in that** the third layer comprising diamond which is in part in contact with liquids.

12. Semiconductor device according to one of the preceding claims,
**characterized in that** an interlayer is deposited in between the third layer and the substrate or in between the third layer and the first layer.

13. Semiconductor device according to one of the preceding claims,
**characterized in that** the second layer has a thickness between 5 nm and 25 nm, preferably 10 nm, and preferably an aluminium content between 0 % and 40 %, preferably 30 %.

14. Semiconductor device according to one of the preceding claims,
**characterized in that** the first layer has a thickness between 500 nm and 2 µm, preferably 1 µm.

15. Semiconductor device according to one of the preceding claims,
**characterized by** a spacer layer containing AlN being located between the first layer and the second layer.

16. Semiconductor device according to one of the preceding claims,
**characterized in that** it comprises at least one passivation area.

17. Semiconductor device according to the previous claim,
**characterized in that** the passivation area comprises or consists of poly-crystalline diamond, nano-crystalline diamond, epoxy films, polyimide films, polytetrafluorethylen (PTFE).

18. Semiconductor device according to one of claims 4 to 17,
**characterized in that** the thickness of the barrier layer is between 10 nm and 20 µm, preferably between 1 µm and 10 µm.

19. Semiconductor device according to one of the preceding claims,
**characterized in that** the semiconductor device is a field effect transistor or a high-electron mobility transistor or an ion-sensitive field effect transistor.

20. Method for manufacturing a semiconductor device according to one of claims 1 to 19,
wherein a structure is produced by disposing a first layer comprising GaN, a second layer comprising AlGaN and a third layer comprising diamond, the layers being deposited on each other and/or on a substrate.
